(19) Europäisches Patentamt
European Patent Office
Office européen des brevets

(11) **EP 4 000 914 A1**

(12) **EUROPÄISCHE PATENTANMELDUNG**

(43) Veröffentlichungstag:
**25.05.2022   Patentblatt 2022/21**

(21) Anmeldenummer: **20207866.3**

(22) Anmeldetag: **16.11.2020**

(51) Internationale Patentklassifikation (IPC):
*B32B 1/08* (2006.01)      *B32B 7/025* (2019.01)
*B32B 7/027* (2019.01)      *B32B 27/08* (2006.01)
*B32B 27/20* (2006.01)      *B32B 27/32* (2006.01)
*B32B 27/34* (2006.01)      *B32B 27/36* (2006.01)
*B32B 27/28* (2006.01)      *B32B 27/40* (2006.01)
*B32B 27/30* (2006.01)

(52) Gemeinsame Patentklassifikation (CPC):
**B32B 1/08; B32B 7/025; B32B 7/027; B32B 27/08;
B32B 27/20; B32B 27/286; B32B 27/288;
B32B 27/306; B32B 27/32; B32B 27/322;
B32B 27/34; B32B 27/36; B32B 27/40;**
B32B 2250/02; B32B 2250/03;           (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **TI Automotive (Fuldabrück) GmbH
34277 Fuldabrück (DE)**

(72) Erfinder:
• **THOMKE, Thorsten
34225 Baunatal (DE)**
• **GABBEY, David
48169 Pincknewy, Michigan (US)**
• **VANOSDALE, Brian
46784 Rome City, Indiana (US)**

(74) Vertreter: **Andrejewski - Honke
Patent- und Rechtsanwälte Partnerschaft mbB
An der Reichsbank 8
45127 Essen (DE)**

(54) **GEBOGENES UND MEHRSCHICHTIGES ROHR**

(57)     Ein Rohr (1) umfasst wenigstens eine erste Schicht (3) und eine zweite Schicht (2), wobei die erste Schicht (3) einen ersten Kunststoff K1 aufweist, wobei der erste Kunststoff K1 eine Umwandlungstemperatur $T_{UK1}$ besitzt. Die zweite Schicht (2) umfasst einen zweiten Kunststoff K2, wobei der zweite Kunststoff K2 eine Umwandlungstemperatur $T_{UK2}$ besitzt. Die erste Schicht (3) weist einen Zuschlagstoff Z auf, wobei der Zuschlagstoff Z kein Polymer bzw. Copolymer ist. Der Zuschlagstoff Z ist ein Feststoff, wobei der Feststoff ein Halbleiter oder ein Nichtleiter ist. Der Zuschlagstoff Z begünstigt die dielektrische Erwärmung des Rohres.

Fig.1

EP 4 000 914 A1

(52) Gemeinsame Patentklassifikation (CPC): (Forts.)
B32B 2250/24; B32B 2264/1022;
B32B 2264/1024; B32B 2264/1025;
B32B 2307/204; B32B 2597/00

**Beschreibung**

Die Erfindung betrifft ein Rohr, umfassend wenigstens eine erste Schicht und eine zweite Schicht, wobei die erste Schicht einen ersten Kunststoff K1 aufweist, wobei die zweite Schicht einen zweiten Kunststoff K2 umfasst, wobei die erste Schicht einen Zuschlagstoff Z aufweist, wobei der Zuschlagstoff Z ein Feststoff ist, wobei der Zuschlagstoff Z kein bzw. im Wesentlichen kein Polymer bzw. Copolymer aufweist, wobei der Zuschlagstoff Z die dielektrische Erwärmung der ersten Schicht bzw. des Rohres begünstigt.

Solche mehrschichtigen Rohre aus Kunststoff sind z. B. aus DE 696 13 130 T2 bekannt. Demzufolge wird ein Zuschlagstoff wie Wasser oder ein Weichmacher verwendet, um eine genügend große dielektrische Erwärmung der Kunststoffmaterialien bei einer Hochfrequenzerregung zu erreichen. Es werden für das Rohr Mindestwerte hinsichtlich relativer Permittivität $\varepsilon_r$ und Verlustfaktor d empfohlen, damit die dielektrische Erwärmung und somit auch die Biegefähigkeit des Rohres im Bereich der Biegestellen ausreichend groß ist.

Ferner sind mehrschichtige Kunststoffrohre - u. a. aus EP 1 182 345 A1, EP 2 476 938 A1 und EP 1 452 307 A1 - bekannt, bei denen einzelne oder mehrere Schichten mit einem Zuschlagstoff versehen werden. Bei dem Zuschlagstoff kann es sich beispielsweise um Leitruß oder Graphitfibrillen handeln.

Bei der Entwicklung mehrschichtiger Rohre mit Zuschlagstoff tritt allerdings u. a. das Problem auf, dass das Rohr nach der dielektrischen Erwärmung in einigen Fällen bestimmte, gewünschte Eigenschaften verliert. Beispielsweise passiert es, dass die Barriereeigenschaft einer Barriereschicht teilweise oder gänzlich nachlässt, was sich über vorher-nachher-Versuche gut bestätigen lässt. In anderen Fällen ist festzustellen, dass das Rohr seine Biegeform nach der dielektrischen Erwärmung nicht beibehält.

Es ist daher Aufgabe der Erfindung, ein mehrschichtiges Rohr anzugeben, welches auch nach der dielektrischen Erwärmung gute Materialeigenschaften aufweist und zweckmäßigerweise auch seine Biegeform behält.

Die Erfindung empfiehlt zur Lösung der vorgenannten Aufgabe ein Rohr, umfassend wenigstens eine erste Schicht und eine zweite Schicht, wobei die erste Schicht einen ersten Kunststoff K1 aufweist, wobei der erste Kunststoff K1 eine Umwandlungstemperatur $T_{UK1}$ besitzt, wobei die zweite Schicht einen zweiten Kunststoff K2 umfasst, wobei der zweite Kunststoff K2 eine Umwandlungstemperatur $T_{UK2}$ besitzt, wobei die erste Schicht einen Zuschlagstoff Z aufweist, wobei der Zuschlagstoff Z kein Polymer bzw. Copolymer aufweist, wobei dem ersten Kunststoff K1 ein durch die elektrische Feldkonstante normierter Imaginärteil einer relativen Permittivität zugeordnet ist und dieser als Absorptionsfaktor $A_{K1}$ bezeichnet wird, wobei dem zweiten Kunststoff K2 ein durch die elektrische Feldkonstante normierter Imaginärteil einer relativen Permittivität zugeordnet ist und dieser als Absorptionsfaktor $A_{K2}$ bezeichnet wird, wobei dem Zuschlagstoff Z ein durch die elektrische Feldkonstante normierter Imaginärteil einer relativen Permittivität zugeordnet ist und dieser als Absorptionsfaktor Az bezeichnet wird, wobei der ersten Schicht (2) ein Absorptionsfaktor $A_{S1}$ und der zweiten Schicht (3) ein Absorptionsfaktor $A_{S2}$ zugeordnet ist, wobei die Absorptionsfaktoren $A_{K1}$ und Az über ihr Mischungsverhältnis in der ersten Schicht (2) den Absorptionsfaktor $A_{S1}$ wenigstens mitbestimmen, wobei ein Absorptionsfaktor $A_{K2}$ des zweiten Kunststoffes K2 den Absorptionsfaktor $A_{S2}$ wenigstens mitbestimmt, wobei der Absorptionsfaktor Az größer ist als der Absorptionsfaktor $A_{K1}$, dadurch gekennzeichnet, dass der Zuschlagstoff Z ein Feststoff ist, wobei der Feststoff ein Halbleiter oder ein Nichtleiter ist.

Der Begriff "Halbleiter" meint bevorzugt Materialien, die eine elektrische Leitfähigkeit von höchstens $10^4$ S/cm aufweisen. Vorteilhafterweise beträgt die elektrische Leitfähigkeit von Halbleitern wenigstens $10^{-8}$ S/cm. Zweckmäßigerweise liegt die elektrische Leitfähigkeit von elektrischen Leitern oberhalb derjenigen von Halbleitern, während diejenige von Nichtleitern darunter liegt.

Es ist bevorzugt, dass sich der Feststoff bei 20°C im festen Aggregatzustand befindet und somit weder flüssig noch gasförmig ist. Es ist besonders bevorzugt, dass die Schmelz- bzw. Zersetzungstemperatur des Feststoffs größer ist als diejenige des ersten Kunststoffs.

Der Begriff "Schicht" meint insbesondere eine einzelne Schicht einer Rohrwand, wobei die Rohrwand mehrere, von radial innen nach radial außen aufeinander folgende Schichten aufweist. Eine Schicht besteht bevorzugt aus einem gleichmäßig durchmischten Material, welches eine Materialkomponente oder mehrere Materialkomponenten aufweist. Zweckmäßigerweise umfasst eine Schicht wenigstens einen Kunststoff, wobei der Kunststoff mit einem Zuschlagstoff versehen sein kann. Der Ausdruck "Kunststoff" meint bevorzugt einzelne Polymere, Copolymere und/oder Polymerblends.

Hinsichtlich der Umwandlungstemperatur $T_{UK1}$ und $T_{UK2}$ gilt jeweils, dass diese der jeweiligen Schmelz- bzw. Zersetzungstemperatur des jeweiligen Kunststoffes abzüglich der Raumtemperatur $T_R$ von 20 °C entsprechen. So gilt für einen thermoplastischen Kunststoff K1 mit einer Schmelztemperatur $T_{SK1}$ für $T_{UK1}$:

$$T_{UK1} = T_{SK1} - T_R$$

Im Falle von duroplastischen bzw. nicht-thermoplastischen Kunststoffen entspricht die Umwandlungstemperatur $T_{UK}$ des duroplastischen Kunststoffes dessen Zersetzungstemperatur abzüglich 20°C.

Die Ausdrücke "Elektrische Feldkonstante" $\varepsilon_0$, "relative Permittivität" $\varepsilon_r$ und andere Bezeichnungen elektrischer Größen sind bevorzugt im Sinne des DKE-IEV-Wörterbuches des Vereins Deutscher Ingenieure (= Normenreihe IEC 60050, Stand: 1. Oktober 2019) zu verstehen. Demzufolge lässt sich die komplexe Permittivität $\varepsilon$ wie folgt schreiben:

$$\varepsilon = \varepsilon' + i\,\varepsilon''$$

wobei die komplexe Permittivität $\varepsilon$ sich über die Elektrische Feldkonstante $\varepsilon_0$ normieren lässt:

$$\varepsilon_r = {\varepsilon}/{\varepsilon_0} = {\varepsilon'}/{\varepsilon_0} + i\,{\varepsilon''}/{\varepsilon_0} = \varepsilon_r' + i\,\varepsilon_r''$$

wobei $\varepsilon_r$ der Realteil der relativen Permittivität ist und oft als dielektrische Konstante k' bezeichnet wird. Der Begriff "Konstante" ist allerdings nicht ganz zutreffend, weil k' nicht nur material-, sondern auch frequenz- und temperaturabhängig ist. Der Imaginärteil der relativen Permittivität $\varepsilon_r$" wird oft als "dielektrischer Verlust" bezeichnet, was weiter unten noch erläutert wird. Das Verhältnis aus

$$\varepsilon_r''\big/_{\varepsilon_r'} = \varepsilon''\big/_{\varepsilon'} = \tan\delta = d$$

wird als "dielektrischer Verlustfaktor" d bezeichnet, wobei $\delta$ den Winkel zwischen Imaginär- und Realteil darstellt und Verlustwinkel genannt wird. Der dielektrische Verlustfaktor d wird im englischsprachigen Raum oft "Loss Tangent" oder "Dissipation Factor" genannt.

Es ist üblich, die dielektrischen Eigenschaften von Materialien in Form von Realteil der relativen Permittivität $\varepsilon_r$ einerseits und dem dielektrischen Verlustfaktor d andererseits auszudrücken. Während $\varepsilon_r$ den Anteil der Einkopplung der elektromagnetischen Strahlung in das jeweilige Material beschreibt, drückt d den Anteil der eingekoppelten Strahlung aus, welcher im Material absorbiert wird. Folglich ist das Produkt dieser beiden Größen, also

$$\varepsilon_r' \cdot d = \varepsilon_r' \cdot {\varepsilon_r''}\big/_{\varepsilon_r'} = \varepsilon_r''$$

und damit der dielektrische Wärmeverlust $\varepsilon_r$" proportional zu der eingekoppelten und absorbierten Wärmemenge. Die Proportionalität stellt sich wie folgt dar:

$$p = {P}/{V} = \varepsilon_r''\,\omega\,\varepsilon_0\,E^2 = \varepsilon''\,\omega\,E^2$$

wobei $E^2$ das Quadrat der elektrischen Feldstärke, $\omega$ die Kreisfrequenz, P die Verlustleistung, V das Volumen des dielektrischen Materials und p die Verlustleistungsdichte beschreibt. Dabei wird das elektrische Feld z. B. durch eine elektromagnetische Strahlungsquelle erzeugt, dessen Kreisfrequenz $\omega$ sowie dessen elektrische Feldstärke E die Verlustleistung P ganz maßgeblich bestimmen und ofenseitig die mit Abstand wichtigsten Parameter sind.

Materialseitig bzw. rohrseitig hingegen ist der mit Abstand wichtigste Parameter der dielektrische Verlust $\varepsilon_r$" bzw. $\varepsilon$", welcher hinsichtlich der Wärmeverluste in dem dielektrischen Material eine größere Aussagekraft besitzt als - jeweils für sich genommen - der Realteil der Permittivität $\varepsilon_r$ und der dielektrische Verlustfaktor d.

Die dielektrischen Parameter $\varepsilon_r$ und $\varepsilon_r$" lassen sich beispielsweise mittels Schwingkreisanordnung bestimmen, in welcher neben einer Spule mit einer feststehenden Induktivität L auch noch ein Messkondensator befindlich ist. Dieser ist so gestaltet, dass er eine dielektrische Probe aufnehmen kann, wodurch $\varepsilon_r$ und $\varepsilon_r$" über Bestimmung der Resonanzfrequenz und der Güte des Schwingkreises ermittelt werden können. Darüber hinaus existieren zahlreiche andere allgemein bekannte Messmethoden, die sich v.a. hinsichtlich des Messaufwandes und des untersuchbaren Spektrums von $\varepsilon_r'(\omega)$ und $\varepsilon_r''(\omega)$ unterscheiden.

Weil sowohl $\varepsilon_r$ als auch $\varepsilon_r$" frequenz- und temperaturabhängig sind, kann für die Messung von nur einem dieser Parameter beliebig viel Zeit aufgewendet werden. Daher wird nachfolgend lediglich $\varepsilon_r$" bei 25°C und 10 MHz (eine im Spektrum für die dielektrische Erwärmung liegende Frequenz) bestimmt, wobei der typographischen Einfachheit halber ein materialabhängiger Absorptionsfaktor A definiert wird:

$$\varepsilon_r''(25°C, 10\,\text{MHz}) = A$$

Alle hier genannten Zahlenwerte von Absorptionsfaktoren beziehen sich folglich auf Werte bei 25°C bei 10 MHz bzw. $10^7$ Hz, wodurch insbesondere eine gute Vergleichbarkeit mit Werten aus der Literatur hergestellt wird. Diesbezüglich ist beispielsweise auf das Standardwerk "DIELECTRIC MATERIALS and APPLICATIONS" von Arthur R. von Hippel, Wiley Verlag, 1954, zu verweisen. In den dort offenbarten Wertetabellen sind stets die beiden Werte $\varepsilon_r'=\varepsilon'/\varepsilon_0$ und $\tan\delta=\varepsilon_r''/\varepsilon_r'$ bei 25°C und bei $10^7$ c/s (= $10^7$ Hz) miteinander zu multiplizieren, so dass der materialabhängige Wert $\varepsilon_r''$ (25°C, 10MHz) = A erhalten wird.

Allerdings sind die Kunststoffe K1 und K2 oft nur schwer oder gar nicht dergestalt vom Zuschlagstoff Z zu separieren, dass sich die dielektrischen Eigenschaften der Kunststoffe K1 und K2 beim Verflüssigen bzw. beim Separieren nicht verändern. Jedoch kann beispielsweise der Kunststoff einer Probe der ersten Schicht z. B. durch Verbrennung oder Auflösung restlos entfernt werden, ohne dass die dielektrischen Eigenschaften des Zuschlagstoffs Z verändert werden. Dann kann über die Ermittlung des Absorptionsfaktors Az sowie über die Ermittlung des Absorptionsfaktors $A_{S1}$ und des Mischungsverhältnisses zwischen dem Gewichtsanteil $G_{K1}$ des Kunststoffes und dem Gewichtsanteil Gz des Zuschlagstoffes Z der jeweilige Absorptionsfaktor $A_{K1}$ bestimmt werden:

$$G_{K1} \cdot A_{K1} + G_Z \cdot A_Z = A_{S1}$$

wobei die Gewichtsanteile $G_{K1}$ und Gz dimensionslose Größen sind und addiert 1 ergeben. $G_{K1}$ und Gz werden über das Gewicht einer Probe der ersten Schicht vor Entfernung des Kunststoffes K1 und über das Gewicht des verbleibenden Zuschlagstoffes Z ermittelt. Analog kann bei einer Probe der zweiten Schicht zur Bestimmung von $A_{K2}$ verfahren werden. Nach Umstellung der vorangegangenen Gleichung kann $A_{K1}$ wie folgt berechnet werden:

$$A_{K1} = \frac{A_{S1} - (G_Z \cdot A_Z)}{G_{K1}}$$

Dann kann ein Absorptionsverhältnis AVs ermittelt werden, welches die Absorptionsfaktoren $A_{S1}$ und $A_{S2}$ der ersten und zweiten Schicht zueinander ins Verhältnis setzt:

$$AV_S = {A_{S1}}/{A_{S2}} \, ,$$

wobei im Falle der Bestimmung von $A_{S1}$ bzw. $A_{S2}$ eine Probe des jeweiligen Schichtmaterials (Kunststoff und ggf. Zuschlagstoff) untersucht wird. $A_{S1}$ entsteht durch Materialmischung vom Kunststoff K1 mit dem Zuschlagstoff Z, wobei der Zuschlagstoff Z den Absorptionsfaktor Az aufweist. So kann eine geringe Menge vom Zuschlagstoff Z mit einem sehr hohen Absorptionsfaktor Az den Absorptionsfaktor $A_{S1}$ der ersten Schicht entscheidend beeinflussen.

Wird beispielsweise ein Verhältnis aus dem Absorptionsfaktor $A_{K1}$ eines ersten Kunststoffes K1 und einem Absorptionsfaktor $A_{K2}$ eines zweiten Kunststoffes K2 gebildet, so ist nachfolgend von einem Absorptionsverhältnis $AV_K$ die Rede:

$$AV_K = {A_{K1}}/{A_{K2}}$$

Der Erfindung liegt zunächst die Erkenntnis zugrunde, dass bei der dielektrischen Erwärmung einzelne Schichten zu stark erhitzt werden und regelrecht verbrennen können. Hierdurch kann beispielsweise die Barriereeigenschaft von Barriereschichten stark beeinträchtigt werden. Diese Schichten weisen häufig einen niedrigen Schmelzpunkt auf und sind somit verhältnismäßig wärmeempfindlich. Wärmerobuste Schichten hingegen besitzen einen höheren Schmelzpunkt und bedürfen zwecks dauerhafter Biegeumformung einer größeren Energiemenge bezogen auf die Masse.

Ferner wurde gefunden, dass viele Kompromisse hinsichtlich von im Rohr absorbierter Wärmeenergie unzureichend oder aber sogar nachteilig sind. Es mag passieren, dass bei einem unglücklich gewählten Kompromiss sowohl die wärmeempfindliche Schicht verbrennt und dass die Biegungen der wärmerobusten Schichten sich der Biegeform aufgrund ungenügender Erwärmung nicht im gewünschten Ausmaß anpassen. Während des Biegens kann es in einigen Fällen bei ungenügend erwärmten Schichten zu Mikrorissen im Bereich der Biegestellen der wärmerobusten Schichten kommen. Es ist daher eine wesentliche Erkenntnis der Erfindung, dass die Schichten hinsichtlich der dielektrischen Erwärmung aufeinander abzustimmen sind und nicht etwa nur die zu absorbierende Wärmemenge einer Schicht zu erhöhen ist, wie dies in DE 696 13 130 T2 beschrieben wird.

Außerdem wurde gefunden, dass auch relativ wärmerobuste Schichten neu entwickelter Rohre, beispielsweise solche aus Polyamid, überraschenderweise bei der dielektrischen Erwärmung schmelzen können. Dies war deshalb so überraschend, weil die dielektrischen Energieabsorptionen sauber aufeinander abgestimmt waren und Überhitzungen eigentlich nicht hätten stattfinden dürfen. Dieser Entdeckung liegt die Erkenntnis zugrunde, dass elektrisch leitfähige Materialien, beispielsweise Leitruß, zu einer starken Übererwärmung der jeweiligen Schicht führen, welche die reine dielektrische Erwärmung deutlich übertreffen kann.

Ebenso wurde gefunden, dass sehr viele - wenn nicht sogar alle - Weichmacher die Leitfähigkeit stark erhöhen können. Weichmacher (darunter Wasser) sind oft Halb- oder Nichtleiter und zumeist flüssig und erhöhen die Leitfähigkeit über eine Vergrößerung der Beweglichkeit der Ionen. Erfindungsgemäß werden daher nur feste Stoffe als Zuschlagstoffe in Betracht gezogen.

Durch die erfindungsgemäße Verwendung eines Zuschlagstoffes Z in Form eines festen Halb- oder Nichtleiters hingegen wird der Effekt der Übererwärmung aufgrund zu einer zu großen elektrischen Leitfähigkeit erfindungsgemäß vermieden bzw. stark verringert. Hierdurch beschränkt sich die Erwärmung im Wesentlichen auf die dielektrische Absorption, welche über halbleitende oder nichtleitende Feststoffe sehr gut einstellbar ist.

Der Erfindung liegt weiterhin die Erkenntnis zugrunde, dass die Einstellung der dielektrischen Absorption eines Mehrschichtrohres mit n Schichten auf zwei bzw. drei Wegen vorgenommen werden kann. In einem ersten Fall werden die dielektrischen Absorptionen von den mindestens zwei Schichten über den mindestens einen Zuschlagstoff aufeinander und vorzugsweise auch auf die jeweilige Schmelztemperatur abgestimmt. Demzufolge werden im ersten Fall alle Schichten bei der dielektrischen Erwärmung innerhalb der gleichen Zeit ähnlich stark aufgeweicht.

In einem zweiten Fall werden nicht alle Schichten gleich ähnlich in der gleichen Zeit aufgeweicht. Bei n-Schichten werden z. B. nur n-1, n-2, n-3 oder n-4 oder noch weniger Schichten mit einem Zuschlagstoff Z bzw. unterschiedlichen Zuschlagstoffen Z, X, Y versehen. Vorzugsweise nur die Schichten mit Zuschlagstoff Z, X, Y entwickeln in kurzer Zeit so viel Wärme, dass deren Kunststoff ausreichend aufgeweicht wird und sie die Verformung beim Biegen dauerhaft übernehmen können. Diese Schichten sind in einem ersten Unterfall zudem ausreichend dick bzw. mechanisch stabil, so dass sie das Rohr insgesamt - und insbesondere die Schichten mit zu geringer Wärmeentwicklung bzw. Aufweichung - in der gebogenen Form halten.

In einem zweiten Unterfall sind die Schichten mit Zuschlagstoff nicht so dick, dass sie die Verformung beim Biegen halten können. Stattdessen wird jedoch über eine entsprechend große Zeitspanne der dielektrischen Erwärmung dafür gesorgt, dass die Schichten mit Zuschlagstoff länger als eigentlich erforderlich mit dielektrischer Erwärmung beaufschlagt werden. Dann strahlt ein ausreichend großer Teil an Wärmeenergie an die anderen Schichten ab, welche hierdurch genügend aufgeweicht werden.

Für diese zwei Fälle bzw. drei Unterfälle bedarf es einer präzisen Einstellung der dielektrischen Erwärmung. Dies wird mit einem Zuschlagstoff Z erreicht, welcher erfindungsgemäß ein halbleitender oder nichtleitender Feststoff ist und dessen Absorptionsfaktor $A_Z$ größer ist als $A_{K1}$.

Es ist besonders bevorzugt, dass die elektrische Leitfähigkeit des Rohres in Längsrichtung des Rohres geringer ist als $10^{-8}$ S/m bzw. als $10^{-9}$ S/m bzw. als $10^{-10}$ S/m bzw. als $10^{-11}$ S/m. Zweckmäßigerweise wird zur Bestimmung der elektrischen Leitfähigkeit das Rohr an beiden Enden, vorzugsweise entlang der gesamten jeweiligen Stirnfläche, kontaktiert. Es ist aufgrund des Längenbezugs der Einheit der elektrischen Leitfähigkeit möglich, kurze oder sehr kurze Teilstücke, z.B. von 10mm oder sogar nur von 1mm Länge, aus dem Rohr herauszuschneiden und zu vermessen. Die resultierenden Werte in den Einheiten S bzw. Ω können aufgrund des konstanten Rohrquerschnitts mittels Umrechnung ohne Weiteres auf die Länge 1m und damit auf die Einheit S/m bezogen werden. Die Schnitte sind zweckmäßigerweise senkrecht zur Rohrachse ausgeführt und vorteilhafterweise geglättet, beispielsweise mittels Politur oder ähnlichen Verfahren. Die Schichten des Rohres stellen vorzugsweise eine Parallelschaltung unterschiedlicher Widerstände dar. Typischerweise wird die elektrische Leitfähigkeit des Rohres in Längsrichtung des Rohres aufgrund der Parallelschaltung v.a. durch die elektrisch leitfähigste Schicht bestimmt.

Mit besonders großem Vorteil ist der Absorptionsfaktor $A_Z$ größer als der Absorptionsfaktor $A_{S2}$ bzw. $A_{K2}$. Vorzugsweise ist der Absorptionsfaktor $A_Z$ wenigstens um Faktor 1,5 bzw. 2 bzw. 2,5 bzw. 3 größer als $A_{S2}$ bzw. $A_{K2}$. Dies dient der dielektrischen Anpassung der Schichten aneinander.

Es ist ebenfalls für die Anpassung der Schichten aneinander sehr vorteilhaft, dass der Absorptionsfaktor $A_{S2}$ bzw. $A_{K2}$ größer als $A_{K1}$ ist. Vorzugsweise ist der Absorptionsfaktor $A_{S2}$ bzw. $A_{K2}$ wenigstens um Faktor 1,5 bzw. 2 bzw. 2,5 bzw. 3 größer als $A_{K1}$.

Es ist sehr bevorzugt, dass der Kunststoff K1 der ersten Schicht ein Polymer umfasst, welches aus einer der Polymerklassen "aromatisches Polyamid (PA), aliphatisches PA, teilaromatisches PA, Polyester (PES), Polyetherketone (PEK), Ethylen-Vinylalkohol-Copolymer (EVOH), Fluorpolymer (FP), Polyvinylidenchlorid (PVDC), Polyphenylensulfid (PPS), Polyurethan (PU), thermoplastisches Elastomer (TPE), Polyolefin (PO)" ausgewählt ist, wobei der Kunststoff K2 der zweiten Schicht (2) ein Polymer umfasst, welches aus einer anderen der genannten Polymerklassen ausgewählt ist. Hintergrund dieser Überlegung ist, dass vor allem Polymere unterschiedlicher Polymerklassen der dielektrischen Anpassung bedürfen.

Es ist möglich, dass das Rohr eine weitere Schicht bzw. weitere Schichten aus Kunststoff aufweist, wobei vorzugsweise die weitere Schicht bzw. die weiteren Schichten den Zuschlagstoff Z aufweist bzw. aufweisen. Vorteilhafterweise umfasst der Kunststoff der weiteren Schicht / der weiteren Schichten ein Polymer aus der Polymerklasse von Kunststoff K1. Besonders bevorzugt umfasst der Kunststoff K1 dasselbe Polymer wie die weitere Schicht / die weiteren Schichten. Die erste Schicht und die weitere Schicht / die weiteren Schichten können denselben Kunststoff K1 aufweisen. Die zweite Schicht kann zwischen der ersten Schicht und der wenigstens einen weiteren Schicht angeordnet sein. Es ist möglich, dass die weitere Schicht von der zweiten Schicht umschlossen wird bzw. die zweite Schicht umschließt. Die weitere Schicht kann an der zweiten Schicht anliegen. Es ist möglich, dass der Zuschlagstoff Z in der weiteren Schicht / in den weiteren Schichten denselben Gewichtsanteil Gz wie im Falle der ersten Schicht ausmacht.

Es mag von Vorteil sein, dass die erste Schicht an der zweiten Schicht anliegt und/oder die zweite Schicht umschließt bzw. von der zweiten Schicht umschlossen wird. Zweckmäßigerweise wird die erste Schicht an die zweite Schicht hinsichtlich dielektrischer Erwärmung bzw. Aufweichung angepasst, so dass es eines Zuschlagstoffes in der zweiten Schicht nicht bedarf. Das Anliegen der Schichten ist insbesondere im zweiten Fall bzw. im zweiten und dritten Unterfall von Bedeutung, bei denen die Wärme von der ersten Schicht abgestrahlt wird.

Es ist möglich und in einigen Fällen bevorzugt, dass die zweite Schicht keinen festen und nichtleitenden oder halbleitenden Zuschlagstoff aufweist. Es ist möglich, dass das Rohr eine andere, Kunststoff umfassende Schicht bzw. andere, Kunststoff umfassende Schichten ohne feste und halbleitende oder nichtleitende Zuschlagstoffe aufweist. Vorzugsweise umfasst der Kunststoff der anderen Schicht / der anderen Schichten ein Polymer aus der Polymerklasse von Kunststoff K2. Weiter bevorzugt weist der Kunststoff K2 dasselbe Polymer wie die andere Schicht / die anderen Schichten auf. Die zweite Schicht und die andere Schicht / die anderen Schichten können denselben Kunststoff K2 umfassen. Vorteilhafterweise ist der Absorptionsfaktor $A_{K2}$ der zweiten Schicht größer als die Absorptionsfaktoren der übrigen Schichten des Rohres.

Es ist sehr bevorzugt, dass der erste Kunststoff K1 und der zweite Kunststoff K2 thermoplastisch sind, so dass zweckmäßigerweise die Umwandlungstemperaturen $T_{UK1}$ und $T_{UK2}$ von den zugehörigen Schmelztemperaturen abhängen. Vorzugsweise definiert die erste Umwandlungstemperatur $T_{UK1}$ geteilt durch die zweite Umwandlungstemperatur $T_{UK2}$ ein Umwandlungstemperaturverhältnis UV, wobei $A_{K1}$ geteilt durch $A_{K2}$ ein Absorptionsverhältnis $AV_K$ definiert, wobei das Umwandlungstemperaturverhältnis UV geteilt durch das Absorptionsverhältnis $AV_K$ ein Hauptverhältnis $HV_K$ definiert, so dass

$$HV_K = \frac{UV}{AV_K} = \frac{T_{UK1}}{A_{K1}} \cdot \frac{A_{K2}}{T_{UK2}}$$

gilt, wobei ein Unterschiedsfaktor $UF_K$ aus dem Hauptverhältnis $HV_K$ nach

$$UF_K = \begin{matrix} HV_K, & HV_K > 1 \\ 1/HV_K, & HV_K < 1 \end{matrix}$$

ermittelt wird, wobei $A_{S1}$ geteilt durch $A_{S2}$ ein Absorptionsverhältnis AVs definiert, wobei das Umwandlungstemperaturverhältnis UV geteilt durch das Absorptionsverhältnis AVs ein Hauptverhältnis HVs definiert, so dass

$$HV_S = \frac{UV}{AV_S} = \frac{T_{UK1}}{A_{S1}} \cdot \frac{A_{S2}}{T_{UK2}}$$

gilt, wobei ein Unterschiedsfaktor UFs aus dem Hauptverhältnis HVs nach

$$UF_S = \begin{matrix} HV_S, & HV_S > 1 \\ 1/HV_S, & HV_S < 1 \end{matrix}$$

ermittelt wird, wobei die Ungleichung U

$UF_S < UF_K$ erfüllt ist. Vorzugsweise wird jeweils ein Unterschiedsfaktor $UF_K$ bzw. UFs zwischen HVs bzw. $HV_K$ zu dem Wert 1 ermittelt, wobei der jeweilige Unterschiedsfaktor UF dem jeweiligen Hauptverhältnis HV entspricht, wenn das Hauptverhältnis HV größer als 1 ist. Anderenfalls entspricht der jeweilige Unterschiedsfaktor UF dem reziproken Wert des jeweiligen Hauptverhältnisses HV. Folglich nimmt der Unterschiedsfaktor im Idealfall einen Wert von 1 an und ist umso schlechter, je größer er als 1 ist.

Es wurde gefunden, dass es von sehr großem Vorteil ist, wenn die einzelne Schicht hinsichtlich ihrer individuellen Wärmeabsorption mittels Beimengung eines Zuschlagstoffes Z auf die jeweilige Umwandlungstemperatur Tu bzw. Schmelztemperatur des Kunststoffs der jeweiligen Schicht abgestimmt wird. Ganz wesentliche Erkenntnis ist es, dass diese Abstimmung bevorzugt so vorgenommen wird, dass sich das Absorptionsverhältnis AVs der beiden Schichten durch die Hinzufügung des Zuschlagstoffes Z an das Umwandlungstemperaturverhältnis UV der beiden Kunststoffe annähert. Hierdurch wird die Wärme der dielektrischen Erwärmung besser auf die Schichten verteilt, so dass die Aufweichungen der ersten und der zweiten Schicht aneinander angenähert werden. Wenn der Unterschiedsfaktor $U_{FS}$ gegen 1 läuft, dann werden die beiden Schichten etwa gleich stark aufgeweicht. Hierdurch wird eine besonders schnelle und schonende Biegung erreicht (erster Fall).

Es ist sehr bevorzugt, dass der Unterschiedsfaktor UFS einen Wert von höchstens 20, vorzugsweise von höchstens 10, weiter vorzugsweise von höchstens 5, besonders vorzugsweise von höchstens 2, ganz besonders vorzugsweise von höchstens 1,5 und im Idealfall von höchstens 1,2 annimmt.

Es ist möglich, dass das Rohr eine zusätzliche Schicht bzw. mehrere zusätzliche Schichten aus Kunststoff aufweist, wobei die zusätzliche Schicht bzw. die zusätzlichen Schichten einen Zuschlagstoff Y mit einem Gewichtsanteil Gy umfasst/umfassen, wobei der Zuschlagstoff Y ein nichtleitender oder halbleitender Feststoff ist. Vorteilhafterweise ist der Absorptionsfaktor $A_Y$ des jeweiligen Zuschlagstoffes Y der zusätzlichen Schicht größer ist als derjenige des Kunststoffs der jeweiligen zusätzlichen Schicht. Es ist bevorzugt, dass der Kunststoff der zusätzlichen Schicht / der zusätzlichen Schichten ein anderer als der Kunststoff K1 und/oder K2 ist. Vorzugsweise umfasst der Kunststoff der zusätzlichen Schicht / zusätzlichen Schichten ein anderes Polymer als der Kunststoff K1 und/oder K2. Es ist sehr bevorzugt, dass das Polymer des Kunststoffes der zusätzlichen Schicht / der zusätzlichen Schichten aus einer anderen Polymerklasse als der Kunststoff K1 oder K2 ausgewählt ist. Mit besonders großem Vorteil ist der Absorptionsfaktor $A_Y$ größer als der Absorptionsfaktor $A_{S2}$ bzw. $A_{K2}$. Vorzugsweise ist der Absorptionsfaktor $A_Y$ wenigstens um Faktor 1,5 bzw. 2 bzw. 2,5 bzw. 3 größer als $A_{S2}$ bzw. $A_{K2}$.

Es liegt insbesondere im Rahmen der Erfindung, dass die Schicht bzw. die Schichten mit einem halbleitenden oder nichtleitenden Feststoff bzw. die erste Schicht bzw. die erste Schicht und die weitere Schicht / die weiteren Schichten / die zusätzliche Schicht / die zusätzlichen mehr als 50% bzw. 70% bzw. 90% bzw. 95% des Gewichts des Rohres ausmacht/ausmachen. Es ist möglich, dass die zweite Schicht bzw. die zweite Schicht und die andere Schicht / die anderen Schichten weniger als 50% bzw. 30% bzw. 10% bzw. 5% des Gewichts des Rohres ausmacht/ausmachen. Dies erlaubt es - trotz ungenügender Aufweichung der zweiten Schicht - eine Biegung innerhalb kurzer Zeit durchzuführen, weil die erste Schicht aufgrund ihrer mechanischen Stabilität die zweite Schicht in der gebogenen Form hält (zweiter Unterfall).

Es ist vorteilhaft, wenn die Ungleichung U auch bei einer Temperatur von 80°C und vorzugsweise auch von 140°C erfüllt ist. Gemäß einer bevorzugten Ausführungsform ist die Ungleichung U auch bei einer Anregungsfrequenz von 20 MHz und vorteilhafterweise auch von 40 MHz erfüllt.

Es ist möglich, dass die zweite Schicht einen Zuschlagstoff X aufweist, welchem ein Gewichtsanteil Gx zugeordnet ist. Der Gewichtsanteil Gx wird relativ zu dem Gewicht der zweiten Schicht bestimmt. Dann gilt für die Bestimmung von $A_{S2}$ das folgende:

$$G_{K2} \cdot A_{K2} + G_X \cdot A_X = A_{S2}$$

Damit kann auch $A_{K2}$ über eine Entfernung des Kunststoffanteiles bestimmt werden, wenn die zweite Schicht einen Zuschlagstoff X aufweist.

Besonders vorzugsweise ist der Zuschlagstoff Z und/oder der Zuschlagstoff Y und/oder der Zuschlagstoff X ein kristalliner Stoff. Es ist sehr vorteilhaft, wenn der Zuschlagstoff Z und/oder der Zuschlagstoff Y und/oder der Zuschlagstoff X ein anorganischer und vorzugsweise ein keramischer Stoff ist.

Der Zuschlagstoff Z und/oder der Zuschlagstoff Y und/oder der Zuschlagstoff X kann insbesondere ein Metalloxid aufweisen, wobei das Metalloxid vorzugsweise ausgewählt ist aus der Gruppe "Zinkoxid, Zirkoniumdioxid, titanhaltiges Metalloxid". Das titanhaltige Metalloxid ist bevorzugt ausgewählt aus der Gruppe "Titandioxid, Magnesiumtitanat, Strontiumtitanat, Bariumtitanat". Der Zuschlagstoff Z und/oder der Zuschlagstoff Y und/oder der Zuschlagstoff X kann aber auch Molybdändisulfid aufweisen. Diese Materialien besitzen große Absorptionsfaktoren, so dass nur geringe Mengen den Schichten beigemischt werden müssen und die Eigenschaften der Schichten ansonsten praktisch unverändert bleiben.

Gemäß einer besonders bevorzugten Ausführungsform ist der Absorptionsfaktor $A_Z$ und/oder der Absorptionsfaktor $A_Y$ und/oder der Absorptionsfaktor $A_X$ größer als 0,002, bevorzugt größer als 0,005, weiter bevorzugt größer als 0,01, vorzugsweise größer als 0,02 und weiter vorzugsweise größer als 0,05, besonders vorzugsweise größer als 0,1 und ganz besonders vorzugsweise größer als 0,15 oder auch größer als 0,2. Es ist von Vorteil, dass der Absorptionsfaktor $A_Z$ und/oder der Absorptionsfaktor $A_Y$ und/oder der Absorptionsfaktor $A_X$ kleiner als 100, weiter bevorzugt kleiner als 30 und besonders bevorzugt kleiner als 10 ist. Große Absorptionsfaktoren haben den Vorteil, dass nur eine geringe Menge des jeweiligen Zuschlagstoffes beigemengt werden muss, so dass die jeweilige Schicht ihre sonstigen Eigenschaften kaum verändert. Zu große Werte der Absorptionsfaktoren können bei größeren Partikeln lokale Mikroverbrennungen verursachen.

Es ist zweckmäßig, wenn der Gewichtsanteil $G_Z$ relativ zur ersten Schicht und/oder der Gewichtsanteil $G_Y$ relativ zur zusätzlichen Schicht und/oder der Gewichtsanteil $G_X$ relativ zur zweiten Schicht wenigstens 0,0001, vorzugsweise wenigstens 0,001, weiter vorzugsweise wenigstens 0,01 und besonders vorzugsweise wenigstens 0,1 beträgt. Es liegt im Rahmen der Erfindung, dass der Gewichtsanteil $G_Z$ relativ zur ersten Schicht und/oder der Gewichtsanteil $G_Y$ relativ zur zusätzlichen Schicht und/oder der Gewichtsanteil $G_X$ relativ zur zweiten Schicht höchstens 0,5 und bevorzugt höchstens 0,3 beträgt.

Es ist bevorzugt, dass der Zuschlagstoff Z und/oder der Zuschlagstoff Y und/oder der Zuschlagstoff X pulverförmig ist. Vorteilhafterweise beträgt ein durchschnittlicher Partikeldurchmesser des Zuschlagstoffes Z und/oder des Zuschlagstoffes Y und/oder des Zuschlagstoffes X höchstens $500\mu m$ bzw. $200\mu m$ bzw. $100\mu m$ bzw. $50\mu m$ bzw. $20\mu m$ bzw. $10\mu m$. Dies erlaubt bzw. vereinfacht die Herstellung entsprechend dünner Schichten und gewährleistet eine möglichst gute Wärmeverteilung.

Es ist bevorzugt, dass die erste Schicht oder die zweite Schicht eine Barriereschicht ist. Gemäß einer bevorzugten Ausführungsform ist die zweite Schicht die Barriereschicht. Vorzugsweise umfasst das Material der Barriereschicht einen Kunststoff, welcher ausgewählt ist aus der Gruppe "EVOH, Fluorpolymer, PPA, Polyolefin, PVDC, TPE", wobei insbesondere EVOH, Fluorpolymere, PPA bzw. PVDC als Kunststoffe für die Barriereschicht bevorzugt sind und EVOH der bevorzugteste Kunststoff für die Barriereschicht ist. Es ist zweckmäßig, dass die Barriereschicht zwischen einer innersten und einer äußersten Schicht angeordnet ist. Gemäß einer Ausführungsform ist die zweite Schicht bzw. die Barriereschicht die innerste Schicht. Es ist möglich, dass die Barriereschicht die innerste Schicht bildet und vorzugsweise ein Fluorpolymer umfasst.

Es ist möglich, dass das Rohr n Schichten umfasst, wobei bevorzugt wenigstens n-1 Schichten jeweils wenigstens einen Zuschlagstoff Z, Y, X aufweisen. Es ist vorteilhaft, dass die Schicht j mit dem Kunststoff mit dem größten Absorptionsfaktor $A_{Kj}$ keinen Zuschlagstoff umfasst. Bei mehr als zwei Schichten mag der Unterschiedsfaktor $UF_S$ bzw. $UF_K$ als $UF_{Sij}$ bzw. $UF_{Kij}$ geschrieben werden, wobei i jeweils für eine andere Schicht als Schicht j steht. Es ist bevorzugt, dass alle Unterschiedsfaktoren $UF_{Sij}$ kleiner als 20 bzw. 10 bzw. 5 bzw. 2 bzw. 1,5 bzw. 1,2 sind. Vorteilhafterweise gilt für wenigstens zwei und idealerweise alle Unterschiedsfaktoren $UF_{Sij}$, dass diese kleiner sind als der jeweils dazugehörige Unterschiedsfaktor $UF_{Kij}$.

Es liegt im Rahmen der Erfindung, dass das Rohr wenigstens eine Biegestelle, bevorzugt wenigstens zwei bzw. drei und besonders bevorzugt wenigstens vier oder fünf Biegestellen aufweist. Das Rohr ist bevorzugt coextrudiert und weiter bevorzugt einstückig. Der Begriff "einstückig" meint insbesondere, dass das Rohr nur in einer zerstörenden Weise in mehrere Stücke unterteilt werden kann.

Zweckmäßigerweise beträgt der Außendurchmesser des Rohres höchstens 30 mm und vorzugsweise höchstens 20mm. Es ist bevorzugt, dass sich die Wandstärke der Rohrwandung auf 0,1 mm bis 5 mm und weiter bevorzugt auf 0,3 mm bis 3 mm beläuft. Es ist möglich, dass die Schichtdicke der ersten Schicht und/oder der zweiten Schicht 0,05 mm bis 1,5 mm und besonders bevorzugt 0,1 mm bis 0,5 mm beträgt.

Die Erfindung empfiehlt zur Lösung der vorgenannten Aufgabe eine Fluidleitung mit einem erfindungsgemäßen Rohr, wobei die Fluidleitung an beiden Enden des Rohres jeweils einen Leitungsverbinder aufweist, wobei vorzugsweise wenigstens einer der Leitungsverbinder reversibel mit einem Gegenstück verbindbar ist. Vorteilhafterweise ist der wenigstens eine Leitungsverbinder mit dem Gegenstück reversibel verrastbar. Es ist bevorzugt, dass der wenigstens eine Leitungsverbinder einen weiblichen Kupplungskörper umfasst. Zweckmäßigerweise ist der Kupplungskörper ausgebildet, das Gegenstück fluiddicht aufzunehmen. Das Gegenstück ist zweckmäßigerweise als männlicher Steckverbinder ausgestaltet und umfasst vorzugsweise einen Steckerschaft und einen den Steckerschaft umlaufenden Bund oder eine den Steckerschaft umlaufende Nut.

Bevorzugt weist der wenigstens eine Leitungsverbinder einen Rückhalter auf, wobei der Leitungsverbinder bevorzugt so ausgebildet ist, dass der Rückhalter - bei einem Einschieben des männlichen Steckverbinders in den Kupplungskörper - den männlichen Steckverbinder anhand des umlaufenden Bundes / der umlaufenden Nut in dem Kupplungskörper verrastet. Der Rückhalter ist bevorzugt ringförmig, insbesondere ovalringförmig oder kreisringförmig, oder U-förmig ausgebildet. Der Rückhalter umfasst zweckmäßigerweise auseinanderspreizbare Arme. Es ist bevorzugt, dass die Arme bei Einführung des Gegenstücks elastisch auseinanderspreizbar sind und bei vollständigem Einschieben des Gegenstücks den männlichen Steckverbinder anhand des umlaufenden Bundes / der umlaufenden Nut in dem Kupplungskörper verrasten.

Nachfolgend wird die Erfindung anhand einer lediglich ein Ausführungsbeispiel darstellenden Zeichnung näher erläutert. Es zeigen in schematischer Darstellung:

Fig. 1    einen Querschnitt durch ein erfindungsgemäßes Rohr,

Fig. 2    eine Seitenansicht einer erfindungsgemäßen Fluidleitung umfassend das Rohr aus Fig. 1 und weiter aufweisend zwei Leitungsverbinder,

Fig. 3    einen jeweils in den beiden Leitungsverbindern angeordneten Rückhalter in einer Vorderansicht.

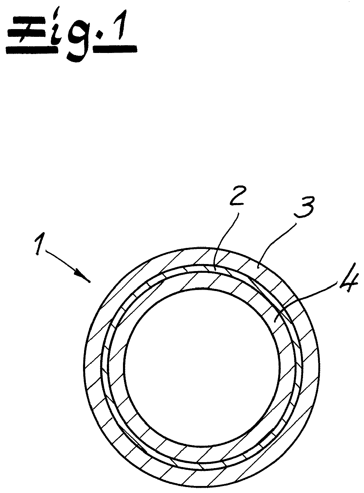

Das erfindungsgemäße Rohr 1 besitzt gemäß Fig. 1 drei Schichten 2, 3, 4, wobei die mittlere Schicht 2 eine Barriereschicht ist und EVOH umfasst. Die äußere Schicht 3 sowie die innere Schicht 4 weisen jeweils ein Polyamid 6 auf, wobei das Polyamid 6 der inneren Schicht 4 identisch ist zu dem Polyamid 6 der äußeren Schicht 3. Das Polyamid 6 mag einen Absorptionsfaktor von 0,1 aufweisen, während die mittlere Schicht 2 aus EVOH in diesem Ausführungsbeispiel einen Absorptionsfaktor von 0,6 besitzt. Die äußere Schicht 3 aus Polyamid 6 mag als "erste Schicht" mit einem ersten Kunststoff K1 verstanden werden, während die mittlere Schicht 2 nachfolgend als "zweite Schicht" mit einem zweiten Kunststoff K2 aufgefasst wird. Die innere Schicht 4 dieses Ausführungsbeispiels kann als "weitere Schicht" verstanden werden, welche ebenfalls den ersten Kunststoff K1 aufweist.

Demzufolge beläuft sich der Absorptionsfaktor $A_{K1}$ auf den Wert 0,1, während der Absorptionsfaktor $A_{K2}$ 0,6 beträgt. Beide Kunststoffe K1 (PA6) und K2 (EVOH) sind thermoplastisch, sodass deren Umwandlungspunkt ihrem Schmelzpunkt abzüglich von 20°C entspricht. Somit beträgt die Umwandlungstemperatur $T_{UK1}$ vom Polyamid 6 dieses Ausführungsbeispiels 200K (= 220 °C - 20 °C), während die Umwandlungstemperatur $T_{UK2}$ von EVOH in diesem Ausführungsbeispiel 163K (= 183 °C - 20 °C) betragen mag.

Aufgrund des sechsfach höheren Absorptionsfaktors und aufgrund des geringeren Schmelzpunktes erreicht das EVOH (zweite Schicht 2) durch die dielektrische Erwärmung sehr viel schneller eine Temperatur, bei welcher sich das EVOH gut biegen lässt. Allerdings sind zu dem gleichen Zeitpunkt die beiden Polyamidschichten (die erste Schicht 3 bzw. die weitere Schicht 4) noch nicht ausreichend erwärmt, sodass diese noch nicht gut gebogen werden können. Wird das Rohr weiter erwärmt, bis auch die beiden Polyamidschichten eine zufriedenstellende Biegung zulassen, erwärmt sich die mittlere Schicht so stark, dass sie regelrecht verbrennt und Ihre guten Barriereeigenschaften nahezu vollständig verliert. Das Hauptverhältnis $HV_K$ berechnet sich im vorliegenden Ausführungsbeispiel zu

$$HV_K = \frac{UV}{AV_K} = \frac{T_{UK1}}{T_{UK2}} \cdot \frac{A_{K2}}{A_{K1}} = \frac{200}{163} \cdot \frac{0,6}{0,1} = 7,3$$

wobei $HV_K > 1$ ist, so dass der Unterschiedsfaktor $UF_K$ ebenfalls 7,3 beträgt.

Erfindungsgemäß wird nun der ersten Schicht 3 und der weiteren Schicht 4 ein Zuschlagstoff Z in Form von pulverförmigem Zirkoniumdioxid (auch Zirkonia genannt) beigemengt. Dieser Zuschlagstoff Z ist ein Metalloxid, liegt in kristalliner Form vor und mag einen Absorptionsfaktor $A_Z$ mit dem Wert 2 besitzen. Somit weist der Zuschlagstoff Z einen Absorptionsfaktor auf, welcher etwa um Faktor 20 größer ist als derjenige von Polyamid 6 und Faktor 3 größer ist als derjenige von EVOH. Der Gewichtsanteil $G_Z$ des Zuschlagstoffes Z in den beiden Polyamidschichten mag 10 % bzw. 0,1 betragen. Somit berechnet sich der Absorptionsfaktor $A_{S1}$ der ersten Schicht 3 und der Absorptionsfaktor $A_{SW}$ der weiteren Schicht 4 zu

$$A_{S1} = A_{SW} = G_{K1} \cdot A_{K1} + G_Z \cdot A_Z = 0,9 \cdot 0,1 + 0,1 \cdot 2 = 0,29$$

so dass der Absorptionsfaktor $A_{S1}$ bzw. Asw über die Beimengung des Zuschlagstoffes Z nahezu verdreifacht wurde. Der Absorptionsfaktor $A_{S2}$ hingegen bleibt gleich und ist folglich identisch zu $A_{K2}$. Damit ergibt sich für das Hauptverhältnis $HV_S$ der folgende Wert:

$$HV_S = \frac{UV}{AV_S} = \frac{T_{UK1}}{T_{UK2}} \cdot \frac{A_{S2}}{A_{S1}} = \frac{200}{163} \cdot \frac{0,6}{0,29} = 2,5 = UF_S$$

Im Ergebnis ist der Unterschiedsfaktor UFs kleiner als der Unterschiedsfaktor $UF_K$, sodass die Ungleichung U für die erste Schicht 3 erfüllt ist. Dies gilt in gleicher Weise auch für die weitere Schicht 4, welche aus demselben Material wie die erste Schicht 3 besteht und mithin aus derselben Polymerschmelzequelle stammen mag.

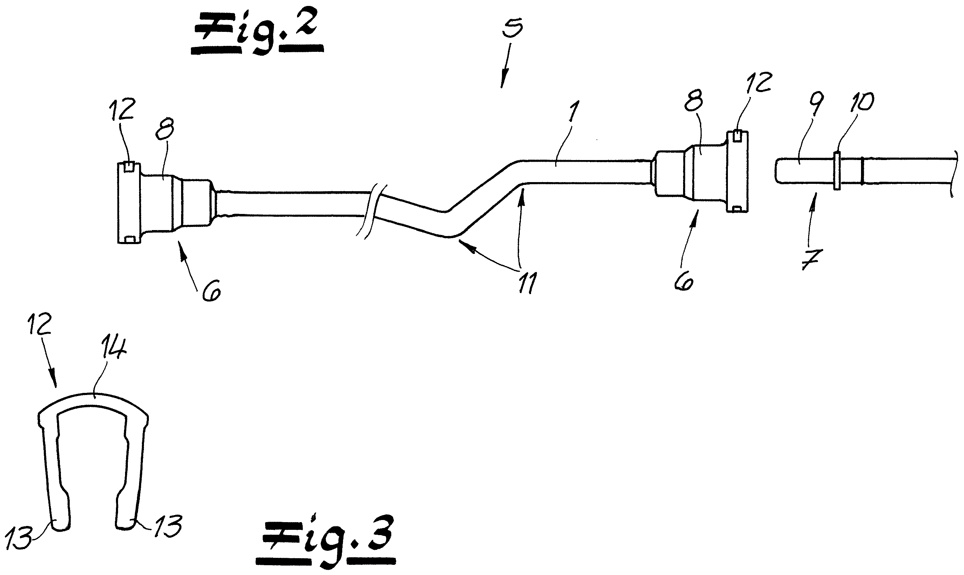

In Fig. 2 ist das Rohr 1 aus Fig. 1 als Bestandteil einer ganzen Fluidleitung 5 dargestellt. Die Fluidleitung 5 umfasst neben dem Rohr 1 mit Biegestellen 11 in diesem Ausführungsbeispiel auch noch zwei Leitungsverbinder 6, welche jeweils an einem Ende des Rohres 1 angeordnet sind. Die Leitungsverbinder 6 dieses Ausführungsbeispiels sind als weibliche Leitungsverbinder 6 ausgebildet und imstande, männliche Gegenstücke 7 aufzunehmen. Auf der rechten Seite der Fig. 2 ist ein solches männliches Gegenstück 7 abgebildet, welches seinerseits an ein Rohr (wie angedeutet) oder aber an andere Komponenten (Pumpen, Tanks usw.) angeschlossen sein kann. Das Gegenstück dieses Ausführungsbeispiels umfasst einen Steckerschaft 9 sowie einen umlaufenden Bund 10.

Zwecks Verbindung mit dem Gegenstück 7 umfassen die Leitungsverbinder 6 jeweils einen weiblich ausgebildeten Kupplungskörper 8, welcher beispielsweise über eine kraftschlüssige oder stoffschlüssige Verbindung an dem Rohr 1 befestigt ist. Die stoffschlüssige Verbindung mag beispielsweise als Laserschweißnaht ausgebildet sein. Eine kraftschlüssige Verbindung kann z. B. über umlaufende Rippen des Kupplungskörpers 8 hergestellt werden, auf welche das Ende des Rohres 1 aufgeschoben wird. Der Kupplungskörper 8 nimmt den Steckerschaft 9 des Gegenstücks 7 auf und weist in seinem Inneren zur Abdichtung vorzugsweise einen hier nicht dargestellten O-Ring auf.

Vorteilhafterweise sind der Leitungsverbinder und das dazugehörige Gegenstück 7 reversibel miteinander verbindbar, was idealerweise durch eine Rastverbindung erreicht wird. Hierzu wird in den Kupplungskörper 8 ein Rückhalter 12 eingeschoben, wobei der Rückhalter 12 bevorzugt U-förmig ausgebildet ist, s. Fig. 3. Der Rückhalter 12 weist einen Kopfabschnitt 14 als U-Basis sowie zwei Arme 13 als U-Schenkel auf. Die Arme 13 sind über den umlaufenden Bund 10 des Gegenstücks 7 elastisch auseinanderspreizbar, sodass nach Passieren des umlaufenden Bundes 10 die beiden Arme 13 wieder ihre ursprüngliche Position annehmen und das Gegenstück 7 wieder in dem Kupplungskörper 8 verrasten. Beispielsweise durch Druck auf den Kopfabschnitt 14 und eine entsprechende Ausgestaltung des Kupplungskörpers 8 können die beiden Arme 13 auseinandergespreizt werden, sodass im Anschluss daran das Gegenstück 7 aus dem Kupplungskörper 8 gezogen werden kann.

**Patentansprüche**

1. Rohr (1), umfassend wenigstens eine erste Schicht (3) und eine zweite Schicht (2), wobei die erste Schicht (3) einen ersten Kunststoff K1 aufweist, wobei der erste Kunststoff K1 eine Umwandlungstemperatur $T_{UK1}$ besitzt, wobei die zweite Schicht (2) einen zweiten Kunststoff K2 umfasst, wobei der zweite Kunststoff K2 eine Umwandlungstemperatur $T_{UK2}$ besitzt, wobei die erste Schicht (3) einen Zuschlagstoff Z aufweist, wobei der Zuschlagstoff Z kein Polymer bzw. Copolymer ist,
wobei dem ersten Kunststoff K1 ein durch die elektrische Feldkonstante normierter Imaginärteil einer relativen Permittivität zugeordnet ist und dieser als Absorptionsfaktor $A_{K1}$ bezeichnet wird, wobei dem zweiten Kunststoff K2 ein durch die elektrische Feldkonstante normierter Imaginärteil einer relativen Permittivität zugeordnet ist und dieser als Absorptionsfaktor $A_{K2}$ bezeichnet wird, wobei dem Zuschlagstoff Z ein durch die elektrische Feldkonstante normierter Imaginärteil einer relativen Permittivität zugeordnet ist und dieser als Absorptionsfaktor Az bezeichnet wird, wobei der ersten Schicht (3) ein Absorptionsfaktor $A_{S1}$ und der zweiten Schicht (2) ein Absorptionsfaktor $A_{S2}$ zugeordnet ist, wobei $A_{K1}$ und $A_Z$ über ihr Mischungsverhältnis in der ersten Schicht (3) den Absorptionsfaktor $A_{S1}$ der ersten Schicht (3) wenigstens mitbestimmen, wobei der Absorptionsfaktor $A_{K2}$ des zweiten Kunststoffes K2 den Absorptionsfaktor $A_{S2}$ der zweiten Schicht (2) wenigstens mitbestimmt,
wobei der Absorptionsfaktor AZ größer ist als der Absorptionsfaktor $A_{K1}$, **dadurch gekennzeichnet, dass** der Zuschlagstoff Z ein Feststoff ist, wobei der Feststoff ein Halbleiter oder ein Nichtleiter ist.

2. Rohr (1) nach Anspruch 1, wobei die elektrische Leitfähigkeit des Rohrs (1) in Längsrichtung des Rohrs (1) geringer ist als $10^{-8}$ S/m und vorzugsweise geringer als $10^{-9}$ S/m.

3. Rohr (1) nach einem der Ansprüche 1 oder 2, wobei der Absorptionsfaktor Az größer als der Absorptionsfaktor $A_{S2}$ bzw. $A_{K2}$ ist.

4. Rohr (1) nach einem der Ansprüche 1 bis 3, wobei der Absorptionsfaktor $A_{K2}$ größer als $A_{K1}$ ist.

5. Rohr (1) nach einem der Ansprüche 1 bis 4, wobei der Kunststoff K1 der ersten Schicht (3) ein Polymer umfasst, welches aus einer der Polymerklassen "aromatisches Polyamid (PA), aliphatisches PA, teilaromatisches PA, Polyester (PES), Polyetherketone (PEK), Ethylen-Vinylalkohol-Copolymer (EVOH), Fluorpolymer (FP), Polyvinylidenchlorid (PVDC), Polyphenylensulfid (PPS), Polyurethan (PU), thermoplastisches Elastomer (TPE), Polyolefin (PO)" ausgewählt ist, wobei der Kunststoff K2 der zweiten Schicht (2) ein Polymer umfasst, welches aus einer anderen der genannten Polymerklassen ausgewählt ist.

6. Rohr (1) nach einem der Ansprüche 1 bis 5, wobei das Rohr (1) eine weitere Schicht (4) bzw. weitere Schichten (4) aus Kunststoff aufweist, wobei vorzugsweise die weitere Schicht (4) bzw. die weiteren Schichten (4) den Zuschlagstoff Z aufweist bzw. aufweisen.

7. Rohr (1) nach einem der Ansprüche 1 bis 6, wobei der erste Kunststoff K1 und der zweite Kunststoff K2 thermoplastisch sind, wobei die erste Umwandlungstemperatur $T_{UK1}$ geteilt durch die zweite Umwandlungstemperatur $T_{UK2}$ ein Umwandlungstemperaturverhältnis UV definiert, wobei $A_{K1}$ geteilt durch $A_{K2}$ ein Absorptionsverhältnis $AV_K$ definiert, wobei das Umwandlungstemperaturverhältnis UV geteilt durch das Absorptionsverhältnis $AV_K$ ein Hauptverhältnis $HV_K$ definiert, so dass

$$HV_K = \frac{UV}{AV_K} = \frac{T_{UK1}}{A_{K1}} \cdot \frac{A_{K2}}{T_{UK2}}$$

gilt, wobei ein Unterschiedsfaktor $UF_K$ aus dem Hauptverhältnis $HV_K$ nach

$$UF_K = \begin{array}{ll} HV_K \ , & HV_K > 1 \\ 1/HV_K \ , & HV_K < 1 \end{array}$$

ermittelt wird, wobei $A_{S1}$ geteilt durch $A_{S2}$ ein Absorptionsverhältnis AVs definiert, wobei das Umwandlungstemperaturverhältnis UV geteilt durch das Absorptionsverhältnis AVs ein Hauptverhältnis HVs definiert, so dass

$$HV_S = \frac{UV}{AV_S} = \frac{T_{UK1}}{A_{S1}} \cdot \frac{A_{S2}}{T_{UK2}}$$

gilt, wobei ein Unterschiedsfaktor $UF_S$ aus dem Hauptverhältnis $HV_S$ nach

$$UF_S = \begin{array}{ll} HV_S \ , & HV_S > 1 \\ 1/HV_S \ , & HV_S < 1 \end{array}$$

ermittelt wird, wobei die Ungleichung U
$UF_S < UF_K$
erfüllt ist.

8. Rohr (1) nach einem der Ansprüche 1 bis 7, wobei das Rohr (1) eine zusätzliche Schicht bzw. mehrere zusätzliche Schichten aus Kunststoff aufweist, wobei die zusätzliche Schicht bzw. die zusätzlichen Schichten einen Zuschlagstoff Y mit einem Gewichtsanteil Gy umfasst/umfassen, wobei der Zuschlagstoff Y ein nichtleitender oder halbleitender Feststoff ist.

9. Rohr (1) nach einem der Ansprüche 1 bis 8, wobei die erste Schicht (3) bzw. die Schichten (3, 4) mit einem halbleitenden oder nichtleitenden Feststoff mehr als 50% bzw. 70% bzw. 90% bzw. 95% des Gewichts des Rohres ausmacht/ausmachen.

10. Rohr (1) nach Anspruch 7, wobei der Unterschiedsfaktor $UF_S$ einen Wert von höchstens 5 und weiter vorzugsweise von höchstens 2 annimmt.

11. Rohr (1) nach einem der Ansprüche 1 bis 10, wobei der Zuschlagstoff Z und/oder der Zuschlagstoff Y kristallin und bevorzugt ein Metalloxid ist.

12. Rohr (1) nach einem der Ansprüche 1 bis 11, wobei der Zuschlagstoff Z und/oder der Zuschlagstoff Y pulverförmig ist, wobei - vorteilhafterweise - der durchschnittliche Partikeldurchmesser des Zuschlagstoffes Z und/oder des Zu-

schlagstoffes Y höchstens 100μm und vorzugsweise höchstens 50μm beträgt.

13. Rohr (1) nach einem der Ansprüche 1 bis 12, wobei eine der Schichten (2, 3, 4), vorzugsweise die zweite Schicht (3), eine Barriereschicht ist, wobei das Material der Barriereschicht vorzugsweise einen Kunststoff aufweist, welcher ausgewählt ist aus der Gruppe "Ethylen-Vinylalkohol-Copolymer, Fluorpolymer, Polyphthalamid, Polyolefin, Polyvinylidenchlorid, thermoplastisches Elastomer".

14. Rohr (1) nach einem der Ansprüche 1 bis 13, wobei das Rohr (1) wenigstens eine Biegestelle (11) und bevorzugt wenigstens zwei bzw. drei Biegestellen (11) aufweist.

15. Fluidleitung (5), umfassend ein Rohr (1), wobei das Rohr (1) gemäß einem der Ansprüche 1 bis 14 ausgebildet ist, wobei die Fluidleitung (5) an Enden des Rohres (1) jeweils einen Leitungsverbinder (6) aufweist, wobei vorzugsweise wenigstens einer der Leitungsverbinder reversibel - vorzugsweise reversibel verrastbar - mit einem Gegenstück (7) verbindbar ist.

Fig.1

Fig.2

Fig.3

Europäisches
Patentamt

European
Patent Office

Office européen
des brevets

**EUROPÄISCHER RECHERCHENBERICHT**

Nummer der Anmeldung

EP 20 20 7866

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 298 055 A1 (BASF SE [DE]) 28. März 2018 (2018-03-28) * Absatz [0038] - Absatz [0045] * * Absatz [0018] * * Absatz [0033] * * Ansprüche 1-15 * * Absatz [0047] * * Absatz [0017] * * Absatz [0037] *  ----- | 1-15 | INV. B32B1/08 B32B7/025 B32B7/027 B32B27/08 B32B27/20 B32B27/32 B32B27/34 B32B27/36 B32B27/28 B32B27/40 B32B27/30 |
| X,D | EP 2 476 938 A1 (UBE INDUSTRIES [JP]) 18. Juli 2012 (2012-07-18) * Absatz [0112] * * Absatz [0110] * * Ansprüche 1-8 *  ----- | 1-15 | |
| A | DE 10 2014 116819 A1 (AURION ANLAGENTECHNIK GMBH [DE]) 19. Mai 2016 (2016-05-19) * Ansprüche 1-7 *  ----- | 1-15 | |

RECHERCHIERTE SACHGEBIETE (IPC)

B32B

Der vorliegende Recherchenbericht wurde für alle Patentansprüche erstellt

| Recherchenort | Abschlußdatum der Recherche | Prüfer |
|---|---|---|
| Den Haag | 13. April 2021 | Weiss, Felix |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument

.......................................................................................................
& : Mitglied der gleichen Patentfamilie, übereinstimmendes
      Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 7866

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-2021

| Im Recherchenbericht angeführtes Patentdokument | Datum der Veröffentlichung | Mitglied(er) der Patentfamilie | Datum der Veröffentlichung |
|---|---|---|---|
| EP 3298055 A1 | 28-03-2018 | BR 112017023125 A2 | 10-07-2018 |
| | | BR 112017024625 A2 | 31-07-2018 |
| | | CN 107636036 A | 26-01-2018 |
| | | CN 107636052 A | 26-01-2018 |
| | | EP 3298054 A1 | 28-03-2018 |
| | | EP 3298055 A1 | 28-03-2018 |
| | | ES 2748810 T3 | 18-03-2020 |
| | | ES 2749655 T3 | 23-03-2020 |
| | | JP 2018517026 A | 28-06-2018 |
| | | JP 2018517027 A | 28-06-2018 |
| | | KR 20180008482 A | 24-01-2018 |
| | | KR 20180008483 A | 24-01-2018 |
| | | PL 3298054 T3 | 29-11-2019 |
| | | PL 3298055 T3 | 31-01-2020 |
| | | RU 2017144274 A | 19-06-2019 |
| | | RU 2017144275 A | 19-06-2019 |
| | | US 2018072861 A1 | 15-03-2018 |
| | | US 2018112053 A1 | 26-04-2018 |
| | | WO 2016187438 A1 | 24-11-2016 |
| | | WO 2016187442 A1 | 24-11-2016 |
| EP 2476938 A1 | 18-07-2012 | BR 112012005041 A2 | 03-05-2016 |
| | | CN 102597590 A | 18-07-2012 |
| | | EP 2476938 A1 | 18-07-2012 |
| | | JP 5673542 B2 | 18-02-2015 |
| | | JP WO2011027863 A1 | 04-02-2013 |
| | | KR 20120072370 A | 03-07-2012 |
| | | US 2012168020 A1 | 05-07-2012 |
| | | WO 2011027863 A1 | 10-03-2011 |
| DE 102014116819 A1 | 19-05-2016 | KEINE | |

Für nähere Einzelheiten zu diesem Anhang : siehe Amtsblatt des Europäischen Patentamts, Nr.12/82

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 69613130 T2
- EP 1182345 A1
- EP 2476938 A1
- EP 1452307 A1

### In der Beschreibung aufgeführte Nicht-Patentliteratur

- **ARTHUR R. VON HIPPEL.** DIELECTRIC MATERI-ALS and APPLICATIONS. Wiley Verlag, 1954